(19) **Europäisches Patentamt European Patent Office Office européen des brevets**

(11) **EP 3 245 703 B1**

(12) **FASCICULE DE BREVET EUROPEEN**

(45) Date de publication et mention de la délivrance du brevet:
**07.11.2018  Bulletin 2018/45**

(21) Numéro de dépôt: **16705221.6**

(22) Date de dépôt: **14.01.2016**

(51) Int Cl.:
*H02J 3/26* *(2006.01)*        *H02J 3/38* *(2006.01)*

(86) Numéro de dépôt international:
**PCT/FR2016/050066**

(87) Numéro de publication internationale:
**WO 2016/113507 (21.07.2016 Gazette 2016/29)**

(54) **SYSTÈME DE RACCORDEMENT D'UN GÉNÉRATEUR DÉCENTRALISÉ MONOPHASE À UN RÉSEAU TRIPHASE**

SYSTEM ZUM VERBINDEN EINES EINPHASIGEN VERTEILTEN GENERATORS MIT EINEM DREIPHASIGEN SPANNUNGSNETZ

SYSTEM FOR CONNECTING A SINGLE-PHASE DISTRIBUTED POWER GENERATING DEVICE TO A THREE-PHASE POWER NETWORK

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.01.2015  FR 1550362**

(43) Date de publication de la demande:
**22.11.2017  Bulletin 2017/47**

(73) Titulaire: **Institut Polytechnique de Grenoble 38000 Grenoble (FR)**

(72) Inventeurs:
• **MERCIER, Aurélien**
  **69100 Villeurbanne (FR)**
• **BENOIT, Clémentine**
  **38000 Grenoble (FR)**
• **BESANGER, Yvon**
  **38190 Brignoud - Villard-Bonnot (FR)**

(74) Mandataire: **Bronchart, Quentin et al Cabinet Hautier 20, rue de la Liberté 06000 Nice (FR)**

(56) Documents cités:
**EP-A1- 2 672 603          EP-A2- 2 665 346
WO-A1-2014/118440          DE-A1-102010 020 609
DE-A1-102011 078 047          FR-A1- 2 970 124**

**Description**

Domaine

La présente demande concerne un système de raccordement entre une charge monophasée ou un générateur décentralisé monophasé et un réseau électrique triphasé. Elle concerne plus particulièrement un tel système permettant d'équilibrer le réseau triphasé.

Exposé de l'art antérieur

De plus en plus fréquemment des générateurs décentralisés, par exemple une éolienne ou un panneau solaire, sont disposés au niveau d'un utilisateur d'un réseau électrique. Egalement, les véhicules électriques se généralisant, il est prévu au niveau des utilisateurs locaux des chargeurs de batteries automobiles. On considère ici le cas où ces générateurs ou chargeurs sont monophasés et sont actifs sensiblement dans les mêmes plages horaires. Ceci contribue au déséquilibre des réseaux triphasés si ces générateurs ou chargeurs sont toujours connectés sur la même phase du réseau.

On a donc prévu divers systèmes pour équilibrer la charge d'un réseau, en commutant la connexion d'un générateur monophasé ou la connexion d'une charge monophasée sur l'une ou l'autre des phases d'un réseau triphasé pour compenser le déséquilibre estimé du réseau.

Un inconvénient des systèmes classiques d'estimation du déséquilibre d'un réseau triphasé est qu'ils se basent ou bien uniquement sur des mesures des tensions de phase du réseau au niveau de l'utilisateur et sont alors généralement imprécis, ou bien sur des mesures des courants de phase du réseau triphasé mais ceci nécessite l'insertion de systèmes de mesure de courant coûteux et intrusifs.

Le document EP 2672603 décrit un dispositif pour connecter un dispositif monophasé à un réseau électrique triphasé.

Le document DE102011078047 décrit un dispositif de sélection de phase dans une alimentation triphasée.

Le document DE102010020609 décrit également un dispositif de commutation sélectionnant une phase dans un réseau triphasé.

Le document FR2970124 décrit un dispositif de raccordement d'un appareil électrique monophasé sur une installation électrique triphasée.

Le document EP-A-2665346 décrit un dispositif et un procédé de sélection de phase pour un luminaire.

Le document WO2014/118440 décrit un système et un procédé pour coupler une source monophasée à un réseau polyphasé.

Résumé

Il existe donc un besoin pour, au niveau d'un utilisateur, prévoir un système de commutation d'un dispositif monophasé produisant ou absorbant de l'énergie électrique sur l'une ou l'autre des phases d'un réseau triphasé qui soit aussi simple, précis et efficace que possible.

Ainsi, il est prévu ici un système de raccordement d'un générateur décentralisé monophasé à l'une ou l'autre phase d'un réseau électrique triphasé, comprenant :

un analyseur couplé au réseau et fournissant les valeurs $V_{\emptyset 1}$, $V_{\emptyset 2}$, $V_{\emptyset 3}$ des tensions des trois phases par rapport au neutre, et la valeur du courant I circulant vers l'une des trois phases ;
un processeur apte à vérifier les inégalités :

$$(V_{\emptyset i} + \alpha_{\emptyset i}{*}I)\beta < V_{\emptyset i+1} \text{ ou } i+2,$$

$$V_{\emptyset i} < V_{\emptyset i+1} \text{ ou } i+2,$$

$$I > n\ I_{max},$$

où i = 1, 2 ou 3, modulo 3,
$\alpha_{\emptyset i}$ est un coefficient de sensibilité, égal au rapport $(V_{\emptyset i\text{-après commutation}} - V_{\emptyset i\text{-avant commutation}})/I$,
$\beta$ est un coefficient de pondération supérieur à 0,5,

n est un coefficient inférieur à 0,5,

$I_{max}$ est le courant maximum que peut fournir le générateur ;

un commutateur pour commuter la sortie du générateur monophasé de la phase i+1 ou i+2 à la phase i si les trois inégalités ci-dessus sont satisfaites ; et

une mémoire pour stocker à chaque commutation la valeur de la sensibilité $\alpha_{\varnothing i}$ de la phase i.

Selon un mode de réalisation, le coefficient de pondération β a une valeur comprise entre 0,75 et 0,95.

Selon un mode de réalisation, le coefficient n a une valeur comprise entre 0,1 et 0,3.

Selon un mode de réalisation, la mémoire stockant les valeurs de sensibilité $\alpha_{\varnothing i}$ classe ces valeurs de sensibilité par plages horaires et par phase et effectue une moyenne glissante des valeurs de sensibilité.

Selon un mode de réalisation, la moyenne glissante est effectuée sur une certaine durée de fonctionnement du système.

Selon un mode de réalisation, la moyenne glissante est effectuée sur un certain nombre de commutations.

Il est également prévu un système de raccordement d'une charge locale monophasée à un réseau électrique triphasé comprenant :

un analyseur couplé au réseau et fournissant les valeurs $V_{\varnothing 1}$, $V_{\varnothing 2}$, $V_{\varnothing 3}$ des tensions des trois phases par rapport au neutre, et la valeur du courant I circulant à partir de l'une des trois phases ;

un processeur apte à vérifier les inégalités :

$$(V_{\varnothing i} + \alpha_{\varnothing i} {}^\star I)\beta > V_{\varnothing i+1 \text{ ou } i+2},$$

$$V_{\varnothing i} > V_{\varnothing i+1 \text{ ou } i+2},$$

où i = 1, 2 ou 3, modulo 3,

$\alpha_{\varnothing i}$ est un coefficient de sensibilité, égal au rapport $(V_{\varnothing i\text{-après commutation}} - V_{\varnothing i\text{-avant commutation}})/I$,

β est un coefficient de pondération supérieur à 0,5 ;

un commutateur pour commuter la charge monophasée de la phase i+1 ou i+2 à la phase i si les deux inégalités ci-dessus sont satisfaites ; et

une mémoire pour stocker à chaque commutation la valeur de la sensibilité $\alpha_{\varnothing i}$ de la phase i.

Brève description des dessins

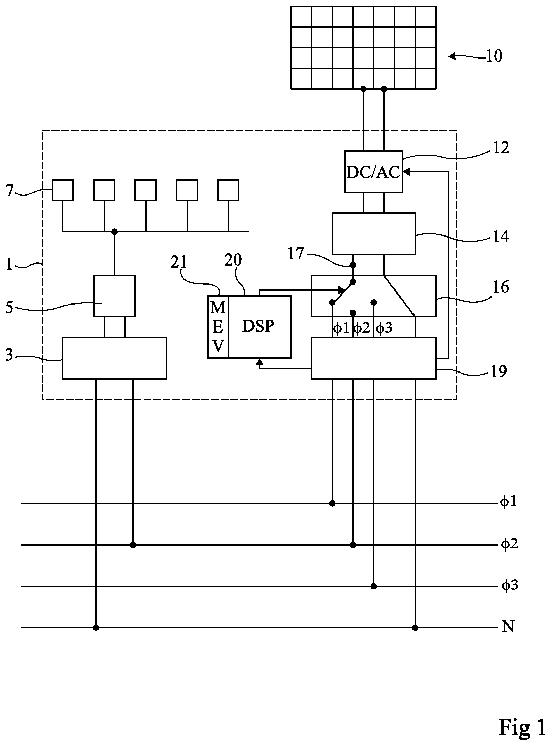

Ces caractéristiques et avantages, ainsi que d'autres, seront exposés en détail dans la description suivante de modes de réalisation particuliers faite à titre non limitatif en relation avec la figure 1 ci-jointe qui représente un mode de réalisation d'un système de couplage d'un générateur monophasé à un réseau triphasé, ce système étant représenté uniquement à titre d'exemple.

Description détaillée

Dans le présent texte, sauf précision contraire, le terme "sensiblement" signifie à 10 % près, de préférence à 5 % près.

La figure 1 représente la connexion d'un site d'utilisateur 1 à un réseau triphasé comprenant une ligne de neutre N et trois lignes de phase ø1, ø2, ø3. De façon classique, l'utilisateur est connecté à une seule phase du réseau, ø2 dans l'exemple représenté. Cette phase ø2 et le neutre N arrivent sur un compteur 3 suivi d'un disjoncteur 5 connecté à divers éléments 7 de l'installation de l'utilisateur, par exemple, des dispositifs d'éclairage, de chauffage, de lavage et des installations informatiques.

Il est de plus en plus fréquent que l'utilisateur dispose d'un générateur décentralisé tel qu'un panneau solaire 10 qui fournit, quand il est éclairé, une puissance électrique continue, variable en fonction de l'éclairement. A ce panneau solaire est ajouté un convertisseur continu-alternatif (DC/AC) 12. Avant ou après le convertisseur continu-alternatif est disposé un disjoncteur 14 sur les deux sorties duquel on trouve un signal alternatif monophasé. Ce signal alternatif monophasé transite par un commutateur 16. La borne de neutre est reliée de façon fixe à une sortie du commutateur et le signal de phase sur une borne 17 est relié à l'un ou l'autre de trois conducteurs de sortie ø1, ø2, ø3 qui sont connectés par l'intermédiaire d'un compteur électrique 19 aux trois lignes ø1, ø2, ø3 du réseau électrique. Le commutateur est commandé par un processeur, par exemple DSP, 20 couplé à une mémoire, MEM, 21. Le compteur électrique 19, ou un dispositif couplé à ce compteur, permet de mesurer les trois tensions de phase ø1, ø2, ø3 du réseau et le courant I circulant depuis la borne 17 vers la phase à laquelle cette borne est couplée, dans l'exemple représenté la phase ø1. Le processeur permet d'effectuer divers calculs à partir des valeurs mesurées et de mémoriser des données dans la mémoire 21.

Le commutateur doit être commandé de façon à appliquer le courant fourni par le générateur décentralisé sur la phase la plus chargée du réseau triphasé de façon à réduire cette surcharge. Un problème à résoudre est de déterminer cette phase la plus chargée et de veiller à ce que la commutation n'augmente pas le déséquilibre de phases au lieu de le réduire. Des essais et des simulations ont montré que, si on commandait le commutateur uniquement en fonction des tensions de phase du réseau en appliquant le courant fourni par le générateur décentralisé systématiquement sur la phase de plus basse tension, on augmentait dans certains cas le déséquilibre des phases du réseau. Ainsi, cette condition (commutation vers la phase de plus basse tension) est une condition nécessaire mais non suffisante.

On propose donc ici de tenir compte de la sensibilité $\alpha_{\text{ø}i}$ des phases du réseau, la sensibilité étant définie comme le rapport entre la différence de la tension $V_{\text{ø}i}$ d'une phase après commutation et avant commutation et le courant I fourni par le générateur. En d'autres termes :

$$\alpha_{\text{ø}i} = (V_{\text{ø}i\text{-après commutation}} - V_{\text{ø}i\text{-avant commutation}})/I.$$

Ce coefficient de sensibilité $\alpha_{\text{ø}i}$ est initialisé à une valeur arbitraire. Il est calculé par le processeur 20 à chaque commutation. La valeur calculée est classée dans la mémoire 21 en fonction de la plage horaire et de la phase concernées. On effectue ensuite dans chaque classe une moyenne glissante des valeurs de sensibilité et la dernière moyenne calculée est utilisée lors de la commutation suivante. La moyenne glissante est effectuée sur une durée choisie de fonctionnement du système, par exemple 1 à 6 mois ou sur un nombre choisi de commutations, par exemple 20 à 100. Les plages horaires tiennent compte d'un historique du réseau. On sépare par exemple les plages les plus chargées (par exemple 8-13 heures et 17-21 heures) des plages moyennement chargées (par exemple 6-8 heures, 13-17 heures et 21-00 heures) et des plages les moins chargées (par exemple 00-6 heures).

En fonctionnement, le processeur 20 vérifie les inégalités suivantes :

$$(V_{\text{ø}i} + \alpha_{\text{ø}i}{*}I)\beta < V_{\text{ø}i+1 \text{ ou } i+2} \qquad (1)$$

$$V_{\text{ø}i} < V_{\text{ø}i+1 \text{ ou } i+2} \qquad (2)$$

$$I > n.I_{max} \qquad (3)$$

où i = 1, 2 ou 3, modulo 3,
$\beta$ est un coefficient de pondération supérieur à 0,5, de préférence compris entre 0,75 et 0,95,
n est un coefficient inférieur à 0,5,
$I_{max}$ est le courant maximum que peut fournir le générateur.

Si les trois conditions (1) à (3) sont satisfaites le commutateur 16 est commandé par le processeur 20 pour commuter la sortie 17 du générateur monophasé de la phase i+1 ou i+2 à la phase i.

A titre d'exemple, dans le cas où i=1 et où le générateur est connecté à la phase 2, le commutateur commutera le signal de la phase 2 vers la phase 1 si les deux conditions suivantes sont satisfaites :

$$(V_{\text{ø}1} + \alpha_{\text{ø}1}{*}I)\beta < V_{\text{ø}2} \qquad (1)$$

$$V_{\text{ø}1} < V_{\text{ø}3}. \qquad (2)$$

La condition (2) signifie que, quand le signal du générateur est connecté à la phase 2 et que la phase 1 a une tension plus basse que la phase 3, il faut envisager de commuter le signal vers la phase 1. Toutefois, cette commutation ne doit être effectuée que si la condition (1) est satisfaite. La condition (1) tient compte du facteur $\alpha_{\text{ø}1}{*}I$, c'est-à-dire de la sensibilité de la phase 1 et du courant fourni par le générateur au moment de la commutation.

La condition (3) (I > n.Imax) est une condition optionnelle. Elle traduit le fait qu'il n'est pas nécessaire d'effectuer des commutations si le courant fourni par le générateur est faible. n est par exemple choisi entre 0,1 et 0,3. Plus n est grand, plus on réduira le nombre de commutations. Le choix sera effectué en fonction du fonctionnement souhaité du système. De même, le coefficient $\beta$ de l'inéquation (1) est un coefficient de pondération, destiné à éviter des commutations trop fréquentes. Le coefficient $\beta$ est choisi à une valeur supérieure à 0,5, de préférence à une valeur comprise entre 0,75 et 0,95. Une diminution de la valeur de $\beta$ entraîne une augmentation de l'hystérésis du système.

On a décrit ci-dessus un mode de réalisation dans lequel on souhaite modifier la connexion d'un générateur monophasé à un réseau triphasé de façon à améliorer l'équilibre du réseau. Ce qui précède s'applique également au cas dans lequel on souhaite modifier la connexion d'une charge de relativement forte valeur, telle qu'un chargeur de batterie, à un réseau triphasé de façon à améliorer l'équilibre du réseau. Dans ce cas, il s'agit de connecter préférentiellement le chargeur à la phase la moins chargée du réseau triphasé, c'est-à-dire la phase de plus haute tension. Les conditions (1) et (2) ci-dessus continueront alors à s'appliquer en remplaçant les symboles "<" par des symboles ">". La condition (3) sera généralement inutile.

Le système décrit ici est susceptible de nombreuses variantes et modifications. Divers moyens peuvent être utilisés pour déterminer les tensions du réseau étant entendu que le plus simple sera d'utiliser des compteurs existants fournissant ces mesures de tensions de phase. De même, divers moyens pourront être envisagés pour mesurer le courant fourni par le générateur (ou absorbé par le chargeur) à un instant donné. D'autre part, on a décrit un processeur et une mémoire séparés. En pratique, ces éléments pourront être confondus en un composant unique. Enfin, divers moyens peuvent être utilisés pour classer les valeurs de $\alpha_{\emptyset i}$ dans diverses catégories. On préfère, comme cela a été indiqué précédemment, utiliser un classement par plages horaires. On pourra prévoir en outre d'autres types de classement. Par exemple, dans le cas de panneaux solaires, on pourra prévoir un classement tenant compte de données météorologiques.

## Revendications

1. Système de raccordement d'un générateur décentralisé monophasé à l'une ou l'autre phase d'un réseau électrique triphasé, comprenant :

   un analyseur (19) couplé au réseau et fournissant les valeurs $V_{\emptyset 1}$, $V_{\emptyset 2}$, $V_{\emptyset 3}$ des tensions des trois phases par rapport au neutre, et la valeur du courant I circulant vers l'une des trois phases ;
   **caractérisé en ce qu'**il comprend en outre:
   un processeur (20) configuré pour vérifier les inégalités :

   $$(V_{\emptyset i} + \alpha_{\emptyset i}{*}I)\beta < V_{\emptyset i+1 \text{ ou } i+2},$$

   $$V_{\emptyset i} < V_{\emptyset i+1 \text{ ou } i+2},$$

   $$I > n\ I_{max},$$

   où i = 1, 2 ou 3, modulo 3,
   $\alpha_{\emptyset i}$ est un coefficient de sensibilité, égal au rapport $(V_{\emptyset i\text{-après commutation}} - V_{\emptyset i\text{-avant commutation}})/I$,
   $\beta$ est un coefficient de pondération supérieur à 0,5,
   n est un coefficient inférieur à 0,5,
   $I_{max}$ est le courant maximum que peut fournir le générateur ;
   un commutateur (16) pour commuter la sortie du générateur monophasé de la phase i+1 ou i+2 à la phase i si les trois inégalités ci-dessus sont satisfaites ; et
   une mémoire (21) pour stocker à chaque commutation la valeur de la sensibilité $\alpha_{\emptyset i}$ de la phase i.

2. Système selon la revendication 1, dans lequel le coefficient de pondération $\beta$ a une valeur comprise entre 0,75 et 0,95.

3. Système selon la revendication 1 ou 2, dans lequel le coefficient n a une valeur comprise entre 0,1 et 0,3.

4. Système selon l'une quelconque des revendications 1 à 3, dans lequel la mémoire (21) stockant les valeurs de sensibilité $\alpha_{\emptyset i}$ classe ces valeurs de sensibilité par plages horaires et par phase et effectue une moyenne glissante des valeurs de sensibilité.

**5.** Système selon la revendication 4, dans lequel la mémoire (21) est adaptée à effectuer la moyenne glissante sur une certaine durée de fonctionnement du système.

**6.** Système selon la revendication 4, dans lequel la mémoire (21) est adaptée à effectuer la moyenne glissante sur un certain nombre de commutations.

**7.** Système de raccordement d'une charge locale monophasée à un réseau électrique triphasé comprenant :

un analyseur (19) couplé au réseau et fournissant les valeurs $V_{\emptyset 1}$, $V_{\emptyset 2}$, $V_{\emptyset 3}$ des tensions des trois phases par rapport au neutre, et la valeur du courant I circulant à partir de l'une des trois phases ;
**caractérisé en ce qu'**il comprend en outre:
un processeur (20) configuré pour vérifier les inégalités :

$$(V_{\emptyset i} + \alpha_{\emptyset i}*I)\beta > V_{\emptyset i+1} \text{ ou } i+2,$$

$$V_{\emptyset i} > V_{\emptyset i+1} \text{ ou } i+2,$$

où i = 1, 2 ou 3, modulo 3,
$\alpha_{\emptyset i}$ est un coefficient de sensibilité, égal au rapport ($V_{\emptyset i\text{-après commutation}}$ - $V_{\emptyset i\text{-avant commutation}}$)/I,
$\beta$ est un coefficient de pondération supérieur à 0,5 ;
un commutateur (16) pour commuter la charge monophasée de la phase i+1 ou i+2 à la phase i si les deux inégalités ci-dessus sont satisfaites ; et
une mémoire (21) pour stocker à chaque commutation la valeur de la sensibilité $\alpha_{\emptyset i}$ de la phase i.

**Patentansprüche**

**1.** System zum Verbinden eines einphasigen verteilten Generators mit der einen oder der anderen Phase eines dreiphasigen Stromnetzes, umfassend:

einen Analysator (19), der an das Netz gekoppelt ist und die Werte VØ1, VØ2, VØ3 der Spannungen der drei Phasen in Bezug auf den Nullleiter, und den Wert des Stroms I, der zu einer der Phasen fließt, bereitstellt;
**dadurch gekennzeichnet, dass** es weiter umfasst:
einen Prozessor (20), der konfiguriert ist, um die Ungleichungen zu überprüfen:

$$(VØi + \alpha Øi*I)\text{ß} < VØi + 1 \text{ oder } i + 2,$$

$$VØi < VØi + 1 \text{ oder } i + 2,$$

$$I > n \text{ Imax},$$

wobei i = 1, 2 oder 3, Modulo 3 ist,
$\alpha$Øi ein Empfindlichkeits-Koeffizient, gleich dem Verhältnis
(VØi-nach dem Umschalten - VØi-vor dem Umschalten)/I ist,
$\beta$ ein Gewichtungskoeffizient größer als 0,5 ist,
n ein Koeffizient kleiner als 0,5 ist,
Imax der maximale Strom ist, den der Generator bereitstellen kann;
einen Umschalter (16) zum Umschalten des Ausgangs des einphasigen Generators der Phase i+1 oder i+2 auf die Phase i, wenn die oben genannten drei Ungleichungen erfüllt sind; und
einen Speicher (21) zum Speichern des Werts der Empfindlichkeit $\alpha$Øi der Phase i bei jedem Umschalten.

**2.** System nach Anspruch 1, wobei der Gewichtungskoeffizient $\beta$ einen Wert zwischen 0,75 und 0,95 aufweist.

**3.** System nach Anspruch 1 oder 2, wobei der Koeffizient n einen Wert aufweist, der zwischen 0,1 und 0,3 enthalten ist.

**4.** System nach einem der Ansprüche 1 bis 3, wobei der Speicher (21), der die Empfindlichkeitswerte $\alpha\text{Ø}i$ speichert, diese Empfindlichkeitswerte nach Zeitfenstern und nach Phase einordnet und einen gleitenden Mittelwert der Empfindlichkeitswerte bildet.

**5.** System nach Anspruch 4, wobei der Speicher (21) angepasst ist, um den gleitenden Mittelwert über eine bestimmte Betriebsdauer des Systems hinweg zu bilden.

**6.** System nach Anspruch 4, wobei der Speicher (21) angepasst ist, um den gleitenden Mittelwert über eine bestimmte Anzahl von Umschaltungen zu bilden.

**7.** System zum Verbinden einer lokalen einphasigen Last mit einem dreiphasigen Stromnetz, umfassend:

einen Analysator (19), der an das Netz gekoppelt ist und die Werte VØ1, VØ2, VØ3 der Spannungen der drei Phasen in Bezug auf den Nullleiter, und den Wert des Stroms I, der aus einer der Phasen fließt, bereitstellt; **dadurch gekennzeichnet, dass** es weiter umfasst:
einen Prozessor (20), der konfiguriert ist, um die Ungleichungen zu überprüfen:

$$(V\text{Ø}i + \alpha\text{Ø}i{*}I)\ \text{ß} > V\text{Ø}i + 1\ \text{oder}\ i + 2,$$

$$V\text{Ø}i > V\text{Ø}i + 1\ \text{oder}\ i + 2,$$

wobei i = 1, 2 oder 3, Modulo 3 ist,
$\alpha\text{Ø}i$ ein Empfindlichkeitskoeffizient, gleich dem Verhältnis
(VØi-nach dem Umschalten - VØi-vor dem Umschalten) /I ist,
$\beta$ ein Gewichtungskoeffizient größer als 0,5 ist;
einen Umschalter (16) zum Umschalten der einphasigen Last der Phase i+1 oder i+2 auf die Phase i, wenn die oben genannten beiden Ungleichungen erfüllt sind; und
einen Speicher (21) zum Speichern des Werts der Empfindlichkeit $\alpha\text{Ø}i$ der Phase i bei jedem Umschalten.

## Claims

**1.** System for connecting a single-phase decentralised generator to one or the other phase of a three-phase electrical network, comprising:

- an analyser (19) coupled to the network and providing the values Vø1, Vø2, Vø3 of the voltages of the three phases with respect to neutral, and the value of the current I circulating towards one of the three phases;

**characterised in that** it further comprises:
a processor (20) configured to verify the inequalities:

$$(V\text{ø}1 + \alpha\text{ø}i{*}I)\beta < V\text{ø}i+1\ \text{or}\ i+2,$$

$$V\text{ø}i < V\text{ø}1+1\ \text{or}\ i+2,$$

$$I > n\ I_{max},$$

where i = 1, 2 or 3, modulo 3,
$\alpha\text{ø}i$ is a sensitivity coefficient, equal to the ratio (Vøi - after switching - Vø1 - before switching)/I,
$\beta$ is a weighting coefficient greater than 0.5,
n is a coefficient less than 0.5,

Imax is the maximum current that can supply the generator;

a switch (16) to switch the output of the single-phase generator from the phase i+1 or i+2 to the phase i, if the three inequalities above are satisfied; and

a memory (21) to store, at each switching, the value of the sensitivity $\alpha \emptyset i$ of the phase i.

2. System according to claim 1, wherein the weighting coefficient $\beta$ has a value of between 0.75 and 0.95.

3. System according to claim 1 or 2, wherein the coefficient n has a value of between 0.1 and 0.3.

4. System according to any one of claims 1 to 3, wherein the memory (21) storing the values of sensitivity $\alpha \emptyset i$ classifies these sensitivity values by time ranges and by phase, and produces a moving average of the sensitivity values.

5. System according to claim 4, wherein the memory (21) is adapted to produce the moving average over a certain duration of functioning of the system.

6. System according to claim 4, wherein the memory (21) is adapted to produce the moving average over a certain number of switches.

7. System for connecting a local single-phase load to a three-phase electrical network, comprising:

an analyser (19) coupled to the network and providing the values V$\emptyset$1, V$\emptyset$2, V$\emptyset$3 of the voltages of the three phases with respect to neutral, and the value of the current I circulating towards one of the three phases;
**characterised in that** it further comprises:
a processor (20) configured to verify the inequalities:

$$(V\emptyset 1 + \alpha \emptyset i * I)\beta > V\emptyset i+1 \text{ or } i+2,$$

$$V\emptyset i > V\emptyset i+1 \text{ or } i+2,$$

where i = 1, 2 or 3, modulo 3,
$\alpha \emptyset i$ is a sensitivity coefficient, equal to the ratio (V$\emptyset$i - after switching - V$\emptyset$1 - before switching)/I,
$\beta$ is a weighting coefficient greater than 0.5,
a switch (16) to switch the single-phase load from the phase i+1 or i+2 to the phase i, if the two inequalities above are satisfied; and
a memory (21) to store, at each switching, the value of the sensitivity $\alpha \emptyset i$ of the phase i.

Fig 1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2672603 A
- DE 102011078047
- DE 102010020609
- FR 2970124
- EP 2665346 A
- WO 2014118440 A